# FASCICULE DE BREVET EUROPEEN

(11) **EP 0 413 382 B1**
(45) Date de publication et mention de la délivrance du brevet: **03.01.1996**
(21) Numéro de dépôt: 90202099.9
(22) Date de dépôt: 02.08.1990
(51) Int. Cl.: H01M 4/60

(54) **Dispositifs électrochimiques de stockage d'énergie comprenant un polymère conducteur d'électricité et leurs utilisations**
Elektrisch leitfähige Polymeren enthaltende elektrochemische Energiespeicher und ihre Verwendung
Electrochemical energy storage devices containing an electrically conductive polymer and their applications

(30) Priorité: 14.08.1989 FR 8910952
(43) Date de publication de la demande: 20.02.1991
(73) Titulaire: SOLVAY (Société Anonyme), B-1050 Bruxelles (BE); COMPAGNIE GENERALE D'ELECTRICITE Société anonyme dite:, F-75382 Paris Cédex 08 (FR)
(72) Inventeur: Hannecart, Etienne, B-1980 Tervuren (BE); Destryker, Elise, B-1600 Sint-Pieters-Leeuw (BE); Fauvarque, Jean, F-75006 Paris (FR); De Guibert, Anne, F-75005 Paris (FR); Andrieu, Xavier, F-91220 Bretigny/Orge (FR)
(74) Mandataire: Nichels, William

(56) Documents cités:
- EP-A- 0 129 070
- EP-A- 0 267 392
- EP-A- 0 280 173
- EP-A- 0 339 341
- WO-A-87/05914
- DE-A- 3 305 401
- DE-A- 3 425 511
- GB-A- 2 184 738
- US-A- 4 880 508
- JOURNAL OF ELECTROANAL. CHEM. INTERFACIAL ELECTROCHEMISTRY, vol. 250, no. 2, 1988; J.R. REYNOLDS et al., pp. 355-371
- PATENT ABSTRACTS OF JAPAN, vol. 12, no. 449 (E-686)[3296], 25 Novembre 1988
- MAKROMOLEKULARE CHEMIE, vol. 5, no. 3, mars 1984; W. WERNET et al., pp. 157-164

## Description

La présente invention concerne des dispositifs électrochimiques de stockage d'énergie contenant une composition comprenant un polymère conducteur d'électricité à base de polypyrrole, substitué ou non, et des groupements ioniques.

On a proposé dans la demande de brevet EP 0 300 330 (BASF - Aktiengesellschaft) l'utilisation de polymères conducteurs d'électricité, tels que le polypyrrole notamment, comme matière active d'électrodes pour réaliser des dispositifs de stockage d'électricité.

Toutefois certaines applications électriques, telles que la réalisation de systèmes de stockage électrochimiques de type capacités ou condensateurs à haute densité d'énergie et à grande durée de cyclage, exigent des polymères conducteurs aux propriétés particulières présentant des morphologies élaborées.

Ces propriétés particulières sont notamment une grande énergie massique et volumique pour les utilisations dans des sources d'énergie alimentant des systèmes portables, une durée de vie élevée du type pseudo-capacitif, une bonne résistance du polymère face au vieillissement dans une large gamme de température et de conditions de stockage.

La morphologie élaborée quant à elle est caractérisée notamment par un volume poreux important et une distribution des tailles des pores adéquates.

La présente invention vise à fournir des nouveaux dispositifs électrochimiques de stockage d'énergie contenant une composition comprenant un polymère conducteur d'électricité à base de pyrrole qui présentent les propriétés particulières susmentionnées.

L'invention concerne à cet effet des dispositifs électrochimiques de stockage d'énergie contenant une composition selon la rev.1 comprenant :
- un polymère conducteur d'électricité choisi parmi du polypyrrole et/ou du polypyrrole substitué et
- des groupements ioniques qui comportent au moins un groupement R-sulfate ou R-sulfonate, R représentant un radical alkyle ou aryle.

Par polypyrrole et/ou polypyrrole substitué, on entend tous les polymères issus du pyrrole et/ou de pyrroles substitués, c'est-à-dire les homopolymères et les copolymères comportant des unités de pyrrole ou de pyrrole substitué. Parmi les pyrroles substitués, on entend habituellement les pyrroles substitués en position 3 ou 3 et 4 et le N-méthylpyrrole. Les meilleurs résultats ont été obtenus avec le pyrrole non substitué.

Généralement :
- lorsque R représente un radical alkyle, on choisit une chaîne aliphatique saturée, substituée ou non par des atomes d'halogènes ou des groupements cycliques, ramifiée ou non, comprenant de 1 à 18 atomes de carbone, ou
- lorsque R représente un radical aryle, on choisit un radical aromatique tels que les radicaux phényle ou benzyle, substitués ou non par des chaînes aliphatiques.

Habituellement R représente :
- une chaîne aliphatique saturée, substituée ou non par des atomes ou groupements tels que les halogènes, ramifiée ou non, comprenant 6 à 12 atomes de carbone, ou
- un radical phényle substitué ou non par une chaîne aliphatique saturée, non substituée, ramifiée ou non, comprenant de 1 à 16 atomes de carbone.

De manière préférée R représente :
- une chaîne aliphatique saturée, ramifiée ou non, comprenant 8 atomes de carbone, ou
- un radical dodécylbenzène.

De manière particulièrement préférée R représente :
- le radical octyle non ramifié, ou
- le radical éthyl-2 hexyle.

Ainsi de bons résultats ont été obtenus avec l'éthyl-2 hexylsulfate, l'octylsulfate, le dodécylbenzènesulfonate, l'octylsulfonate, le dodécylsulfate, un mélange de dodécylbenzènesulfonate et d'éthyl-2 hexylsulfate ou de dodécylbenzènesulfonate et de méthanesulfonate.

Les meilleurs résultats ont toutefois été obtenus avec l'éthyl-2 hexylsulfate.

Les compositions que contiennent les dispositifs selon l'invention peuvent avantageusement contenir d'autres groupements ioniques d'origine organique ou inorganique. Habituellement, elles contiennent comme groupement inorganique un chlorure, un sulfate ou un nitrate et comme groupement organique des groupements du type : trichloroacétate, phénylphosphonate, glycérol-2-phosphate, pentadécylsulfonate, hexadécylsulfonate, polyvinyl-sulfonate, polystyrènesulfonate, tosylate, trifluorométhanesulfonate. De manière préférée, elles contiennent un groupement inorganique et plus particulièrement un groupement chlorure.

Les compositions contiennent habituellement 0,01 à 0,9 partie de groupement R-sulfate ou R-sulfonate par partie de pyrrole et/ou de pyrrole substitué et de préférence 0,05 à 0,5 et de manière particulièrement préférée 0,05 à 0,4.

Le volume poreux des compositions mises en oeuvre dans les dispositifs selon l'invention est habituellement supérieur à 1 cm³.g⁻¹ et est de préférence compris entre 1,5 et 5 cm³.g⁻¹.

Les meilleurs résultats ont été obtenus avec une composition ayant un volume poreux supérieur à 3,5 cm³.g⁻¹.

Les compositions que contiennent les dispositifs selon l'invention, peuvent être préparées par tout procédé tels que les procédés décrits dans le brevet US 4,697,000 (Rockwell).

Un procédé avantageux pour la préparation des compositions comprenant un polymère conducteur d'électricité consiste en une polymérisation chimique du pyrrole et/ou du pyrrole substitué dans un milieu réactionnel aqueux entre 5 et 40°C et comprenant un composé ionique comportant un groupement R-sulfate ou R-sulfonate, R étant tel que défini précédemment, et du chlorure ferrique.

Ces dispositifs selon l'invention peuvent être utilisés pour leurs propriétés de conductivité électrique, d'absorption électromagnétique et de conductivité thermique.

La composition comprenant un polymère conducteur d'électricité que contiennent les dispositifs selon l'invention est généralement dopée par des cations ou des anions pendant la charge ou la décharge du système, les cations ou les anions proviennent de l'électrolyte.

Les électrolytes sont généralement choisis parmi les sels conducteurs de formule C⁺A⁻ dans laquelle C⁺ est un cation et dans laquelle A- est un anion.

Le cation C⁺ est choisi habituellement parmi les ions ammonium, alcalino-terreux ou alcalins, les ions R₄N⁺ et R₄P⁺ (R étant un radical alkyle, tel que les radicaux éthyle et butyle par exemple) et de préférence parmi les cations Li⁺, Na⁺ ou K⁺, ou des ions complexes tels que (Bu)₄N⁺ ou (Et)₄N+, mis en oeuvre de manière préférée sous la forme de LiClO₄, KPF₆, (Bu)₄NClO₄ et (Et)₄NClO₄ en solution dans un solvant tel que l'acétonitrile, le tétrahydrofurane, le carbonate de propylène, le 2-méthyl-tétrahydrofurane, le diméthoxyéthane ou leurs mélanges.

L'anion A- est choisi parmi les ions ClO₄ ⁻, AsF₆ ⁻, SbF₆ ⁻, S04⁻, C₆H₅SO₃ ⁻, BF₄ ⁻, PF₆ ⁻, CF₃SO₃ ⁻, I₃ ⁻, Br⁻ ou NO₃ ⁻. Les meilleurs résultats ont été obtenus avec l'ion ClO₄ ⁻.

Ces dispositifs selon l'invention peuvent avantageusement être utilisés dans des systèmes de stockage électrochimiques de type capacités ou condensateurs à haute densité d'énergie et grande durée de cyclage. Les condensateurs sont constitués de deux électrodes séparées par un électrolyte, au moins une des deux électrodes est constituée de la composition comprenant un polymère conducteur d'électricité. Ces condensateurs électrochimiques de haute énergie spécifique peuvent être des condensateurs symétriques (les deux électrodes sont identiques) ou dissymétriques (les deux électrodes sont de nature différente).

Dans le cas de condensateur dissymétrique, la contre-électrode est formée soit par un polymère conducteur différent, soit par un métal alcalin ou un composé d'insertion. La contre-électrode peut être formée par un polymère dopé p tel que notamment les autres polymères conducteurs d'électricité à base de polypyrroles, substitués ou non, de polythiophènes, substitués ou non, de polyacétylène, de polyphénylène ou de polymère d'aniline.

Ces dispositifs selon l'invention peuvent être également utilisés comme batteries rechargeables ou non, générateur électrochimique, pile ou accumulateur électrique dont les anodes (respectivement les cathodes) sont constituées d'électrodes constituées par ou revêtues de films formés par les compositions comprenant un polymère conducteur d'électricité, dopées par des anions (respectivement des cations).

Les dispositifs selon l'invention peuvent particulièrement être utilisés comme supercondensateur ou comme générateur rechargeable.

Les supercondensateurs selon l'invention possèdent en général une capacité massique de l'électrode d'au moins 120 F/g d'électrode. Les supercondensateurs préférés présentent une capacité massique de l'électrode compris entre 125 F/g et 350 F/g d'électrode.

En ce qui concerne les générateurs rechargeables, ils présentent en général une capacité moyenne de l'élément, restituée en décharge d'au moins 4 mA.h. De préférence, les générateurs rechargeables possèdent une capacité moyenne de l'élément, restituée en décharge compris entre 5 et 10 mA.h.

L'invention est illustrée par les exemples suivants :

### Exemple 1 :

### A. Préparation de la composition de polypyrrole

Dans un ballon à 4 cols de 4000 ml, on introduit sous atmosphère d'azote 750 ml d'eau et 15 ml (0,22 mole) de pyrrole.

Au milieu réactionnel ainsi obtenu, on ajoute, sous agitation à 20°C et en 15 minutes, 9,2 g (0,040 mole) d'éthyl-2 hexylsulfate de sodium (vendu par la Société Tensia sous la marque de commerce TENSATIL DEH.120) et 148 g (0,55 mole) de chlorure ferrique (FeCl₃.6H₂O), le tout étant dissous dans 250 ml d'eau.

Le ballon est maintenu 2 heures à 20°C sous agitation.

On filtre la composition de polymère obtenue, puis on la lave 3 fois par 500 ml d'eau, 3 fois par 500 ml d'un mélange 50/50 d'eau et de méthanol puis 3 fois par 500 ml de méthanol. Ensuite on sèche cette composition sous vide, de 20 mm Hg à 20°C, durant une nuit.

On obtient une poudre noire avec un rendement - polymère calculé comme non dopé/monomère - d'environ 77 % en poids.

La composition finale comprenant le polymère conducteur contient 62 % de polypyrrole.

### B. Dispositif

On réalise un supercondensateur symétrique, les deux électrodes sont identiques et réalisées à partir de la composition telle qu'obtenue ci-dessus mais on sèche la composition sous vide (0,2 mm Hg) à 50°C durant 15 heures.

Ensuite on presse cette composition à 20 °C durant 20 secondes sous une pression de 650 kg par cm.

Puis on imprègne la pastille ainsi obtenue par l'électrolyte constitué par du LiCl0₄ (1M) en solution dans du carbonate de propylène. Le diamètre de la pastille est de 14 mm, cette pastille forme l'électrode et est constituée par 80 mg de polypyrrole dopé.

Le séparateur électrolytique est constitué par un feutre de polyamide imprégné d'électrolyte; ce feutre sert aussi de réserve d'électrolyte.

Les deux électrodes et le séparateur électrolytique sont empilés et montés dans un boitier en nickel de diamètre de 20 mm et d'épaisseur de 2 mm. L'étanchéité est assurée après sertissage par un joint en polypropylène. Ces opérations se font en atmosphère anhydre à température ambiante. On obtient ainsi un élément ayant les caractéristiques détaillées ci-après.

Les résistances série et de transfert mesurées en impédance complexe entre 65 KHz et 0,1 Hz sont respectivement égales à 12 Ω et 70 Ω.

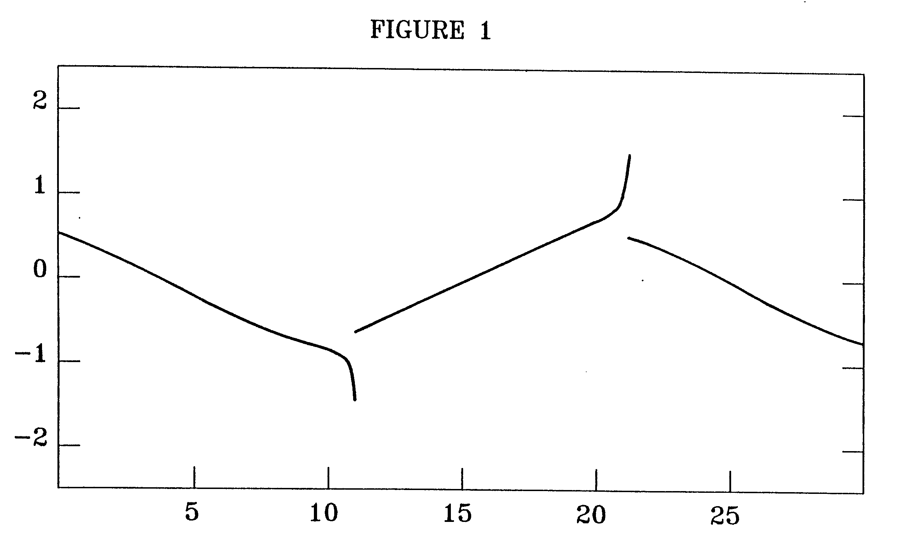

Une courbe de cyclage de ce condensateur entre - 1,5 V et + 1,5 V sous 500 µA à 25°C. est représentée à la figure 1. Dans cette figure le temps en heure est représenté en abscisse, la tension en volt est représentée en ordonnée.

La capacité moyenne de l'élément est de 12,3 F ce qui correspond à une capacité massique de l'électrode de 307 F/g d'électrode, soit 128 A.h/kg d'électrode pour une différence de tension de fonctionnement de 1,5 V.

### Exemple 2

### A. Préparation de la composition

On répète l'exemple 1.A sauf en ce qui concerne l'éthyl-2 hexylsulfate de sodium (0,040 mole) qui est remplacé par du dodécylsulfate de sodium (0,011 mole).

### B. Dispositif

Le dispositif réalisé avec la composition du présent exemple selon les modalités de l'exemple 1B possède une capacité moyenne de l'élément de 7,5 F, ce qui correspond à une capacité massique de l'électrode de 180 F/g.

### Exemple 3

### A. Préparation de la composition de polypyrrole

Dans un ballon à 4 cols de 4000 ml, on introduit sous atmosphère d'azote 750 ml d'eau et 15 ml (0,22 mole) de pyrrole.

Au milieu réactionnel ainsi obtenu, on ajoute, sous agitation à 20°C et en 15 minutes, 11,3 g (0,044 mole) d'octylsulfate de sodium (produit vendu par la Société HENKEL sous la marque de commerce TEXAPON 890) et 148 g (0,55 mole) de chlorure ferrique (FeCl₃.6H₂O), le tout étant dissous dans 250 ml d'eau.

Le ballon est maintenu 2 heures à 20°C sous agitation.

On filtre la composition de polymère ainsi obtenue, puis on la lave 3 fois par 500 ml d'eau, 3 fois par 500 ml d'un mélange 50/50 d'eau et de méthanol puis 3 fois par 500 ml de méthanol.

Ensuite on sèche la composition sous vide, 20 mm Hg à 20°C, durant une nuit.

On obtient une poudre noire avec un rendement - polymère calculé comme non dopé/monomère - d'environ 75 % en poids.

La composition finale comprenant le polymère conducteur contient 57% de polypyrrole.

### B. Dispositif

On réalise avec cette composition un supercondensateur symétrique dont les deux électrodes sont identiques et réalisées àpartir de cette composition.

Pour ce faire, on sèche la composition sous vide (0,2 mm Hg) à 50°C durant 15 heures.

Ensuite, on presse cette composition à 20 °C durant 20 secondes sous une pression de 650 kg/cm.

Puis on imprègne la pastille ainsi obtenue par l'électrolyte constitué par du LiCl0₄ (1M) en solution dans du carbonate de propylène. Le diamètre de la pastille est de 14 mm, cette pastille forme l'électrode et est constituée par 75 mg de polypyrrole dopé.

Le séparateur électrolytique est constitué par un feutre de polyamide imprégné d'électrolyte; ce feutre sert aussi de réserve d'électrolyte.

Les deux électrodes et le séparateur électrolytique sont empilés et montés dans un boîtier en nickel de diamètre de 20 mm et d'épaisseur de 2 mm. L'étanchéité est assurée après sertissage par un joint en polypropylène. Ces opérations se font en atmosphère anhydre à température ambiante. On obtient ainsi un élément ayant les caractéristiques détaillées ci-après.

Les résistances série et de transfert mesurées en impédance complexe entre 65 KHz et 0,1 Hz sont respectivement égales à 18 Ω et 60 Ω.

La capacité moyenne de l'élément est de 9,36 F; ce qui correspond à une capacité massique de l'électrode de 234 F/g d'électrode.

### Exemple 4

### A. Préparation d'une composition de polypyrrole

Dans un ballon à 4 cols de 4000 ml, on introduit sous atmosphère d'azote 750 ml d'eau et 15 ml (0,22 mole) de pyrrole.

Au milieu réactionnel ainsi obtenu, on ajoute, sous agitation à 20°C et en 15 minutes, 5 g (0,022 mole) d'éthyl-2 hexylsulfate de sodium (produit, vendu par la Société Tensia sous la marque de commerce TENSATIL DEH.120), 19 g (0,055 mole) de dodécylbenzène sulfonate de sodium, et 148 g (0,55 mole) de chlorure ferrique (FeCl₃.6H₂O), le tout étant dissous dans 250 ml d'eau.

Le ballon est maintenu 2 heures à 20°C sous agitation. On filtre la composition de polymère ainsi obtenu, puis on la lave 3 fois par 500 ml d'eau, 3 fois par 500 ml d'un mélange 50/50 d'eau et de méthanol puis 3 fois par 500 ml de méthanol.

Ensuite on sèche cette composition sous vide à 20°C et sous 20 mm Hg durant une nuit.

On obtient une poudre noire avec un rendement - polymère calculé comme non dopé/monomère - d'environ 89 % en poids.

La composition finale comprenant le polymère conducteur contient 44% de polypyrrole.

### B. Dispositif

On réalise avec cette composition un générateur rechargeable. L'électrode négative est formée de lithium pur, c'est un disque de lithium de 14 mm de diamètre et de 200 µm d'épaisseur.

L'électrode positive est réalisée à partir de la composition telle qu'obtenue ci-dessus.

Pour ce faire la composition est séchée sous vide (0,2 mm Hg) à 50°C durant 15 heures puis pressée à 20 °C durant 20 secondes sous une pression de 650 kg par cm. Puis on imprègne la pastille ainsi obtenue par l'électrolyte constitué par du LiClO₄ (1M) en solution dans du carbonate de propylène. Le diamètre de la pastille est de 14 mm, cette pastille forme l'électrode positive et contient 73 mg de polypyrrole dopé.

Le séparateur électrolytique est constitué par un feutre de polyamide imprégné d'électrolyte; ce feutre sert aussi de réserve d'électrolyte.

Les deux électrodes et le séparateur électrolytique sont pressés ensemble et montés dans un boîtier en nickel de diamètre de 20 mm et d'épaisseur de 2 mm. L'étanchéité est assurée après sertissage par un joint en polypropylène. Ces opérations se font dans une boîte à gants sous atmosphère d'argon à température ambiante. On obtient ainsi un élément ayant les caractéristiques détaillées ci-après.

Après montage la tension en circuit ouvert mesurée s'élève à 3,20 V.

Les résistances série et de transfert mesurées en impédance complexe entre 65 KHz et 0,1 Hz sont respectivement égales à 20 Ω et 900 Ω.

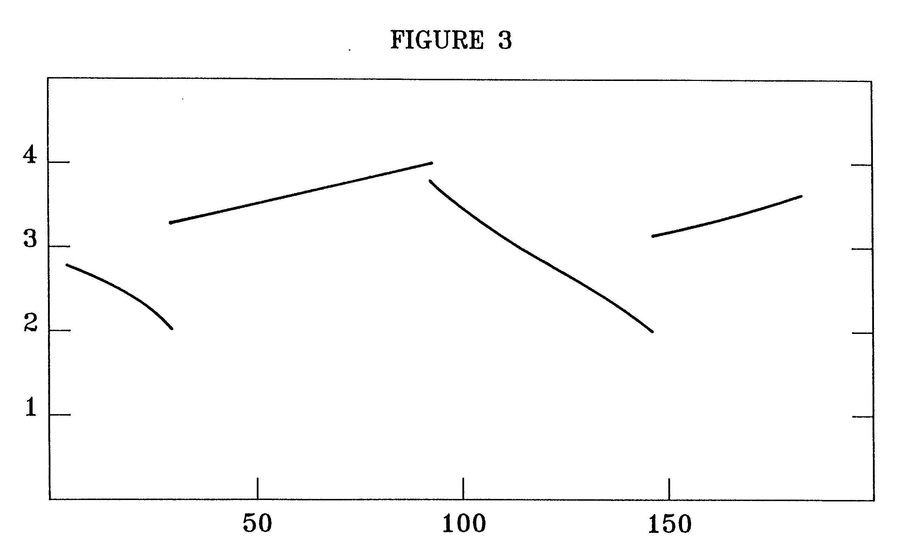

Une courbe de cyclage de ce condensateur entre 2 V et 4 V sous 100 µA à 25°C. est représentée à la figure 3. Dans cette figure le temps en heure est représenté en abscisse, la tension en volt est représentée en ordonnée.

La capacité moyenne de l'élément restituée en décharge est de 5,4 mA.h, ce qui correspond à une capacité massique de l'électrode positive comprenant le dopant de 74 A.h/kg d'électrode.

### Exemple 5

### A. Préparation de la composition de polypyrrole

On répète l'exemple 4.A sauf en ce qui concerne l'éthyl-2 hexylsulfate de sodium et le dodécylbenzènesulfonate de sodium qui sont remplacés par 45 ml d'une solution 1,22 M de méthanesulfonate de sodium (0,055 mole) et par 19 g (0,055 mole) de dodécylbenzènesulfonate de sodium.

### B. Dispositif

La pastille formant l'électrode positive réalisée selon les modalités de l'exemple 4.B contient 88 mg de polypyrrole. La tension en circuit ouvert mesurée est de 3,23 V. Les résistances série et de transfert mesurées en impédance complexe entre 65 KHz et 0,1 Hz sont respectivement égales à 20 Ω et 800 Ω.

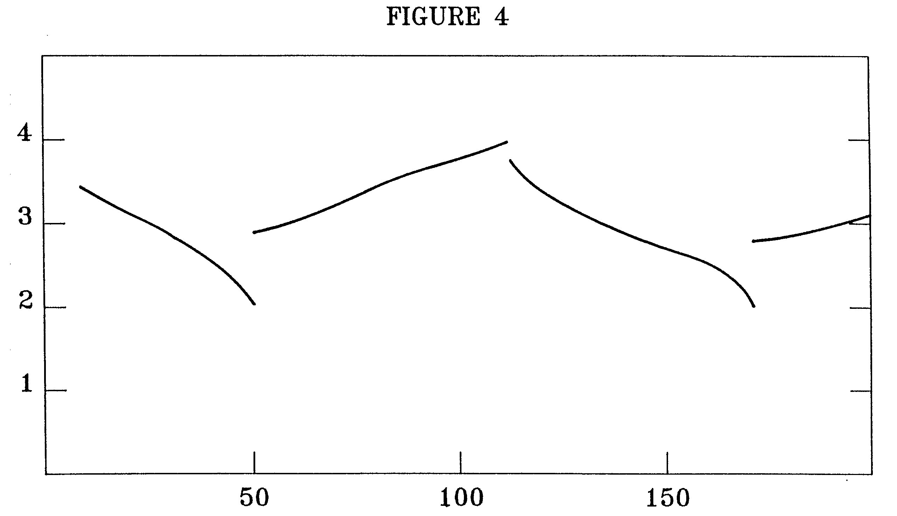

Une courbe de cyclage de ce condensateur entre 2 V et 4 V sous 100 µA à 25°C. est représentée à la figure 4. Dans cette figure le temps en heure est représenté en abscisse, la tension en Volt est représentée en ordonnée.

La capacité moyenne de l'élément restituée en décharge est de 6 mA.h, ce qui correspond à une capacité massique de l'électrode positive comprenant le dopant de 68 A.h/kg d'électrode.

### Exemple 6

### A. Préparation de la composition de polypyrrole

On répète l'exemple 1.A sauf en ce qui concerne l'éthyl-2 hexylsulfate de sodium (0,040 mole) qui est remplacé par du dodécylbenzènesulfonate de sodium (0,022 mole).

### B. Dispositif

Les résistances série et de transfert d'une pastille réalisée selon les modalités de l'exemple 1.B mesurées en impédance complexe entre 65 KHz et 0,1 Hz sont respectivement égales à 11 Ω et 50 Ω.

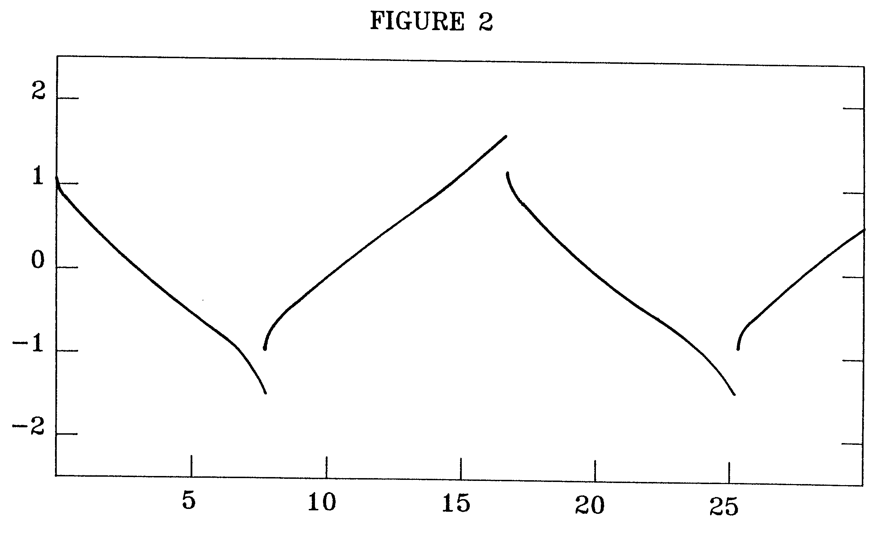

Une courbe de cyclage de ce condensateur entre - 1,5 V et + 1,5 V sous 500 µA à 25°C. est représentée à la figure 2. Dans cette figure le temps en heure est représenté en abscisse, la tension en Volt est représentée en ordonnée.

La capacité moyenne de l'élément est de 7,25 F, ce qui correspond à une capacité massique de l'électrode de 180 F/g d'électrode soit 75 A.h/kg d'électrode pour une différence de tension de fonctionnement de 1,5 V.

## Revendications

1. Dispositifs électrochimiques de stockage d'énergie contenant une ou deux électrodes constituées par ou revêtues de films d'une composition comprenant un polymère conducteur d'électricité (a) choisi parmi du polypyrrole et/ou du polypyrrole substitué, et des groupements ioniques (b) comportant au moins un groupement (b1) R-sulfate ou R-sulfonate, R représentant un radical aryle ou alkyle, caractérisés en ce que la composition comprend en outre au moins un autre groupement ionique (b2), différent du groupement (b1), choisi parmi les groupements chlorure, sulfate, nitrate, trichloroacétate, phénylphosphonate, glycérol-2-phosphate, pentadécylsulfonate, hexadécylsulfonate, polyvinylsulfonate, polystyrènesulfonate, tosylate et trifluoro-méthanesulfonate.

2. Dispositifs selon la revendication 1, caractérisés en ce que le groupement (b1) est un groupement octylsulfate ou éthyl-2 hexylsulfate.

3. Dispositifs selon la revendication 1, caractérisés en ce que le groupement (b1) est un groupement dodécylbenzènesulfonate.

4. Dispositifs selon l'une des revendications précédentes, dans lesquels l'autre groupement ionique (b2) est inorganique.

5. Dispositifs selon la revendication 4, dans lesquels l'autre groupement ionique (b2) est un groupement chlorure.

6. Dispositifs selon l'une des revendications précédentes, caractérisés en ce que la composition comprenant un polymère conducteur d'électricité est dopée par des cations ou des anions.

7. Supercondensateur selon la revendication 6, caractérisé en ce qu'il possède une capacité massique de l'électrode d'au moins 120 F/g d'électrode.

8. Générateur rechargeable selon la revendication 6, caractérisé en ce qu'il possède une capacité moyenne de l'élément, restituée en décharge d'au moins 4 mA.h.

9. Utilisation des dispositifs selon l'une quelconque des revendications précédentes comme condensateurs, batteries rechargeables ou non, piles, accumulateurs d'électricité, générateurs électrochimiques ou capacités électriques.

10. Utilisation des dispositifs selon l'une quelconque des revendications 1 à 6 comme supercondensateur.

11. Utilisation des dispositifs selon l'une quelconque des revendications 1 à 6 comme générateur rechargeable.

## Patentansprüche

1. Elektrochemische Energiespeicher, die eine oder zwei Elektroden enthalten, die aus einer Zusammensetzung bestehen oder mit Filmen einer Zusammensetzung beschichtet sind, die ein elektrisch leitfähiges Polymer (a), das unter Polypyrrol und/oder substituiertem Polypyrrol ausgewählt ist, und ionische Gruppen (b), die wenigstens eine R-sulfat- oder R-sulfonatgruppe (b1) enthalten, wobei R einen Aryl- oder Alkylrest darstellt, umfaßt, dadurch gekennzeichnet, daß die Zusammensetzung außerdem wenigstens eine andere, von der Gruppe (b1) verschiedene, ionische Gruppe (b2) enthält, die unter den Chlorid-, Sulfat-, Nitrat-, Trichloracetat-, Phenylphosphonat-, Glycerin-2-phosphat-, Pentadecylsulfonat-, Hexadecylsulfonat-, Polyvinylsulfonat-, Polystyrolsulfonat-, Tosylat- und Trifluor-methansulfonatgruppen ausgewählt ist.

2. Vorrichtungen gemäß Anspruch 1, dadurch gekennzeichnet, daß die Gruppe (b1) eine Octylsulfat- oder Ethyl-2-hexylsulfatgruppe ist.

3. Vorrichtungen gemäß Anspruch 1, dadurch gekennzeichnet, daß die Gruppe (b1 ) eine Dodecylbenzolsulfonatgruppe ist.

4. Vorrichtungen gemäß einem der vorhergehenden Ansprüche, in denen die andere ionische Gruppe (b2) anorganisch ist.

5. Vorrichtungen gemäß Anspruch 4, in denen die andere ionische Gruppe (b2) eine Chloridgruppe ist.

6. Vorrichtungen gemäß einem der vorhergehenden Ansprüche, dadurch gekennzeichnet, daß die ein elektrisch leitfähiges Polymer enthaltende Zusammensetzung mit Kationen oder Anionen dotiert ist.

7. Superkondensator gemäß Anspruch 6, dadurch gekennzeichnet, daß er eine massenbezogene Kapazität der Elektrode von wenigstens 120 F/g Elektrode besitzt.

8. Wiederaufladbare Zelle gemäß Anspruch 6, dadurch gekennzeichnet, daß sie eine mittlere Kapazität des Elements besitzt, die bei der Entladung von wenigstens 4 mA·h wiedererlangt wird.

9. Verwendung der Vorrichtungen gemäß einem der vorhergehenden Ansprüche als Kondensatoren, wiederaufladbare oder nicht-wiederaufladbare Autobatterien, Batterien, elektrische Akkumulatoren, elektrochemische Zellen oder elektrische Ladungsspeicher.

10. Verwendung der Vorrichtungen gemäß einem der Ansprüche 1 bis 6 als Superkondensator.

11. Verwendung der Vorrichtungen gemäß einem der Ansprüche 1 bis 6 als wiederaufladbare Zelle.

## Claims

1. Electrochemical energy storage devices containing one or two electrodes consisting of or coated with films of a composition comprising an electrically conductive polymer (a) chosen from polypyrrole and/or substituted polypyrrole and ionic groups (b) comprising at least one R-sulphate or R-sulphonate group (b1), R denoting an alkyl or aryl radical, characterized in that the composition further comprises at least one other ionic group (b2), different from the group (b1), selected from the chloride, sulphate, nitrate, trichloroacetate, phenylphosphonate, 2 - glycerolphosphate, pentadecylsulphonate, hexadecylsulphonate, polyvinylsulphonate, polystyrenesulphonate, tosylate and trifluoromethanesulphonate groups.

2. Devices according to Claim 1, characterized in that the group (b1) is an octylsulphate or 2-ethylhexylsulphate group.

3. Devices according to Claim 1, characterized in that the group (b1) is a dodecylbenzenesulphonate group.

4. Devices according to any one of the preceding claims, in which the other ionic group (b2) is inorganic.

5. Devices according to Claim 4, in which the other ionic group (b2) is a chloride group.

6. Devices according to any one of the preceding claims, characterized in that the composition comprising an electrically conductive polymer is doped with cations or anions.

7. Supercapacitor according to Claim 6, characterized in that it has an electrode capacity per unit mass of at least 120 F/g of electrode.

8. Rechargeable generator according to Claim 6, characterized in that it has a mean capacity of the element, restored in discharge of at least 4 mA.h.

9. Use of the devices according to any one of the preceding claims as capacitors, batteries, rechargeable or otherwise, cells, electricity accumulators, electrochemical generators or electrical capacitors.

10. Use of the devices according to any one of Claims 1 to 6 as a supercapacitor.

11. Use of the devices according to any one of Claims 1 to 6 as a rechargeable generator.
